# EUROPEAN PATENT APPLICATION

(11) **EP 2 130 640 A1**
(43) Date of publication of application: **09.12.2009**
(21) Application number: 08739094.4
(22) Date of filing: 27.03.2008
(51) Int. Cl.: B23P 13/02, F16C 23/08, F16C 33/64

(54) **METHOD FOR MANUFACTURING THE OUTER RACE OF SELF-ALIGNING BEARING**

(30) Priority: 29.03.2007 JP 2007087268
(71) Applicant: JTEKT Corporation, Osaka-shi Osaka 542-8502 (JP)
(72) Inventor: KURASHITA, Yoshikazu, Osaka-shi Osaka 542-8502 (JP); ADACHI, Takehiro, Osaka-shi Osaka 542-8502 (JP)
(74) Representative: Hager, Thomas Johannes
(86) International application number: PCT/JP2008/055965
(87) International publication number: WO 2008/123381

(57) **Abstract**

To provide a method of producing an outer ring of a self-aligning bearing in which at a raceway-turning step after a heat treatment, the chipping of a turning tool and damage of a raceway can be prevented.

Before the heat treatment, an annular groove 2b is formed in that portion of the raceway 2a of the outer ring 2 corresponding to lubrication holes 7, thereby avoiding a situation in which a discontinuous cutting operation occurs because of the lubrication holes 7 at the raceway-turning step after the heat treatment.

## Description

### TECHNICAL FIELD

The present invention relates to a method of producing an outer ring of a self-aligning bearing.

### BACKGROUND ART

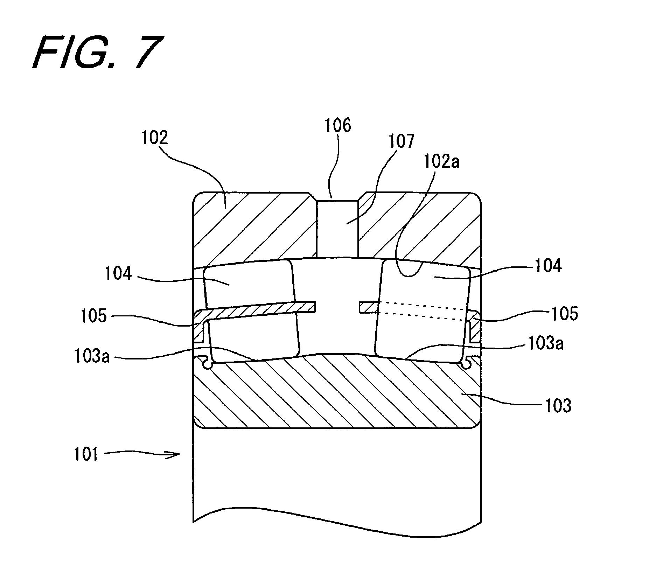

Self-aligning roller bearings are sometimes used for supporting a main shaft of a wind turbine generator, a roll in a continuous casting facility and for other purposes. As a conventional self-aligning roller bearing, there is known one as shown in Fig. 7, in which an outer ring 102 and an inner ring 103 are disposed coaxially with each other, and a plurality of rolling elements 104 comprising respective convex rollers are interposed between the outer ring 102 and the inner ring 103. A spherical outer raceway 102a is formed on an inner periphery of the outer ring 102, and an inner raceway 103a is formed on an outer periphery of the inner ring 103, and the rolling elements 104 held by cages 105 are rollably arranged in a double-row manner between the raceways 102a and 103a. Further, an annular lubrication groove 106 is formed in an axially-central portion of the outer periphery of the outer ring 102, and a plurality of lubrication holes 107 for supplying lubricating oil to the interior of the bearing are formed inwardly of the lubrication groove (see, for example, Patent Literature 1).

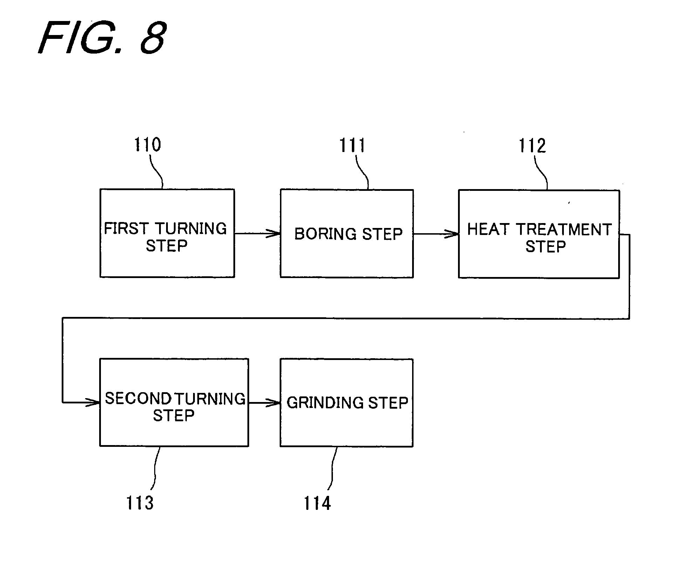

In a method of producing the outer ring 102 of the above self-aligning roller bearing 101, for example, a first turning step 110 of applying a turning operation to an annular stock formed by hot forging or the like to thereby form a blank having predetermined machining allowances formed respectively at its outer periphery, raceway and side faces, a boring step 111 of forming the lubrication holes in the blank which lubrication holes are open to the inner periphery and the outer periphery of the blank, a heat treatment step 112 of hardening the blank, having the lubrication holes formed therein, to predetermined hardness, a second turning step 113 of turning the raceway after the heat treatment step while leaving a grinding allowance and a grinding step 114 of grinding the outer periphery, the raceway and the side faces for finishing purposes for finishing purposes after the second turning step are effected in this order as shown in Fig. 8.

Patent Literature 1: JP-A-11-336753 Publication

### DISCLOSURE OF THE INVENTION

### PROBLEM THAT THE INVENTION IS TO SOLVE

However, the lubrication holes 107 are formed in the outer ring 102, and therefore a discontinuous cutting operation occurs when turning the lubrication hole (107) portions at the second turning step 113. Therefore, along with the fact that the outer ring 102 has been heat treated to be hardened, a strong impact repeatedly acts on a turning tool. As a result, there have been encountered problems that a cutting edge of the turning tool is chipped, so that its life is shortened and that the outer raceway 102a is damaged by the turning tool having the chipped cutting edge.

Furthermore, since the lubrication holes 107 are formed in the outer ring 102, the discontinuous grinding operation occurs when grinding the lubrication hole (107) portions at the above grinding step. Therefore, a strong impact repeatedly acts on a grindstone. Therefore, when the grinding is effected under ordinary grinding conditions, the grindstone is liable to be broken, so that the life of the grindstone is shortened. As a result, with respect to the grinding conditions for the outer raceway 102a, it is necessary, for example, to lower the rotational speed of the grindstone during the grinding operation in order to relieve this impact, and it is necessary to extend the grinding time in order to effect the sufficient grinding operation. Therefore, there has been encountered a problem that the efficiency of the grinding step is worsened.

The present invention has been made in view of the above problems, and its object is to provide a method of producing an outer ring of a self-aligning bearing in which a discontinuous cutting operation at a turning step after a heat treatment can be avoided, and the chipping of a turning tool and damage of a raceway can be prevented, and also a prolonged lift of a grindstone at a grinding step and an enhanced efficiency of the grinding operation can be achieved.

### MEANS FOR SOLVING THE PROBLEM

In order to achieve the above object, a method of the present invention for producing an outer ring of a self-aligning bearing comprises a first turning step of turning an annular stock to form a blank having a predetermined machining allowance formed at a raceway, a boring step of forming lubrication holes in the blank which lubrication holes are open to the raceway and an outer periphery of the blank, a heat treatment step of hardening the blank, having the lubrication holes formed therein, to predetermined hardness, and a second turning step of turning the raceway after the heat treatment step, and is **characterized in that** before the heat treatment step, a turning operation is applied to that portion of the raceway corresponding to the lubrication holes to form an annular groove for avoiding a situation in which a discontinuous cutting operation occurs at the second turning step because of the lubrication holes.
In the present invention, the discontinuous cutting operation occurring at the second turning step can be avoided by the annular groove, and therefore the chipping of a turning tool can be prevented.

Furthermore, a method of the present invention for producing an outer ring of a self-aligning bearing comprises a first turning step of turning an annular stock to form a blank having a predetermined machining allowance formed at a raceway, a boring step of forming lubrication holes in the blank which lubrication holes are open to the raceway and an outer periphery of the blank, a heat treatment step of hardening the blank, having the lubrication holes formed therein, to predetermined hardness, a second turning step of turning the raceway after the heat treatment step while leaving a grinding allowance, and a grinding step of grinding the raceway for finishing purposes after the second turning step, and is **characterized in that** before the heat treatment step, a turning operation is applied to that portion of the raceway corresponding to the lubrication holes to form an annular groove for avoiding a situation in which a discontinuous cutting operation and a discontinuous grinding operation occur respectively at the second turning step and the grinding step because of the lubrication holes.
In the present invention, the discontinuous cutting operation occurring at the second turning step can be avoided by the annular groove, and therefore the chipping of the turning tool can be prevented, and also a prolonged life of a grindstone at the grinding step and an enhanced efficiency of the grinding operation can be achieved.

Furthermore, a method of the present invention for producing an outer ring of a self-aligning bearing may comprise a turning step of turning an annular stock to form a blank having a predetermined grinding allowance formed at a raceway, a boring step of forming lubrication holes in the blank which lubrication holes are open to the raceway and an outer periphery of the blank, a heat treatment step of hardening the blank, having the lubrication holes formed therein, to predetermined hardness, and a grinding step of grinding the raceway for finishing purposes after the heat treatment step, and may be **characterized in that** before the heat treatment step, a turning operation is applied to that portion of the raceway corresponding to the lubrication holes to form an annular groove for avoiding a situation in which a discontinuous grinding operation occurs at the grinding step because of the lubrication holes.
In this case, the prolonged life of the grindstone at the grinding step and the enhanced efficiency of the grinding operation can be achieved.

### ADVANTAGE OF THE INVENTION

In the method of the present invention for producing the outer ring of the self-aligning bearing, the chipping of the turning tool due to the discontinuous cutting operation can be prevented, and therefore the life of this tool can be prolonged, and also the raceway can be prevented from being damaged.

Furthermore, damage of the grindstone due to the discontinuous grinding operation can be suppressed, and therefore the life of the grindstone can be prolonged, and also the enhanced efficiency of the grinding operation can be achieved.

### BRIEF DESCRIPTION OF THE DRAWINGS

[Fig. 1] This is a cross-sectional view showing an important portion of a self-aligning bearing incorporating an outer ring produced by a production method of the present invention.
[Fig. 2] This is an enlarged cross-sectional view of the important portion.
[Fig. 3] This is a process drawing showing one embodiment of a method of producing the outer ring of the self-aligning bearing according to this invention.
[Fig. 4] This is a cross-sectional view showing an important portion of a self-aligning bearing incorporating an outer ring produced by another production method of the present invention.
[Fig. 5] This is an enlarged cross-sectional view of an important portion of Fig. 4.
[Fig. 6] This is a process drawing showing another embodiment of a method of producing the outer ring of the self-aligning bearing according to this invention.
[Fig. 7] This is a cross-sectional view showing an important portion of a conventional self-aligning bearing.
[Fig. 8] This is an explanatory chart showing a method of producing an outer ring of the conventional self-aligning bearing in process order.

### BEST MODE FOR CARRYING OUT THE INVENTION

Embodiments of the present invention will be described below with reference to the drawings.

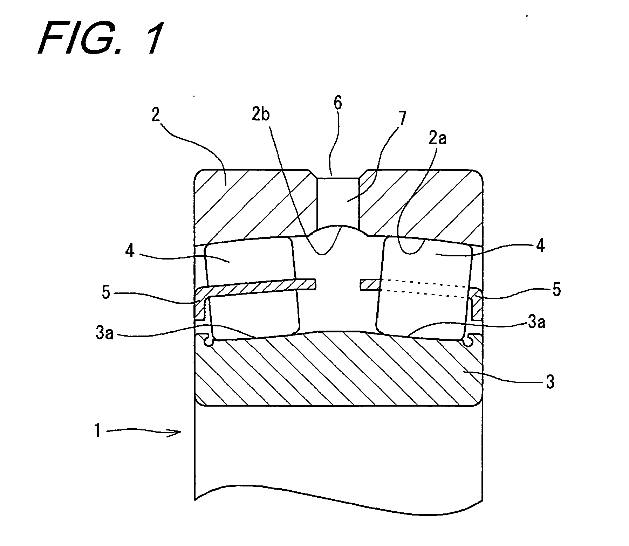

Fig. 1 is a cross-sectional view showing a self-aligning bearing incorporating an outer ring produced by a production method of the present invention. In this self-aligning roller bearing 1, the outer ring 2 having a spherical outer raceway 2a formed on an inner periphery thereof and an inner ring 3 having an inner raceway 3a of a cross-sectionally arc-shape (having the same radius as a radius of the outer raceway 2a in a cross-section including a center axis of this inner ring) formed on an outer periphery thereof are disposed coaxially with each other, and a plurality of rolling elements 4 are interposed between the outer ring 2 and the inner ring 3.

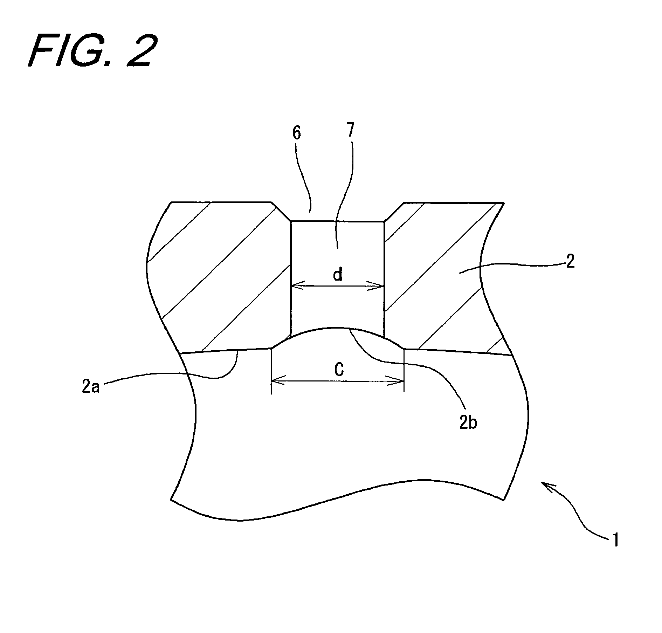

An annular lubrication groove 6 is formed in and along an axially-central portion of the outer periphery of the outer ring 2, and a plurality of lubrication holes 7 for supplying lubricating oil to the interior of the bearing are formed through the outer ring inwardly of this lubrication groove, and are arranged at predetermined intervals in a circumferential direction. About 3 to 8 lubrication holes 7 are formed.
Referring also to Fig. 2, an annular groove 2b is formed in the inner periphery of the outer ring 2. This annular groove 2b is provided in corresponding relation to the lubrication holes 7, and each lubrication hole 7 is open to a bottom of this annular groove 2b. In the drawings, this annular groove 2b has an arc-shaped cross-section, and its axial width C is larger than a bore diameter d of the lubrication hole 7, and also is set to such a range that in a condition in which the axis of the inner ring 3 is inclined to a maximum degree relative to the axis of the outer ring 2, a rolling contact surface of the rolling elements 4 will not overlap the annular groove 2b. This annular groove 2b is provided for the purpose of avoiding a situation in which a discontinuous cutting operation and a discontinuous grinding operation occur respectively at a second cutting step and a grinding step (which will be described later) because of the lubrication holes 7.

The rolling elements 4 comprise respective convex rollers made of bearing steel hardened by a heat treatment, and are rollably interposed in a double-row manner between the outer raceway 2a of the outer ring 2 and the inner raceway 3a of the inner ring 3. The rolling elements 4 are held at predetermined intervals by a cage 5.

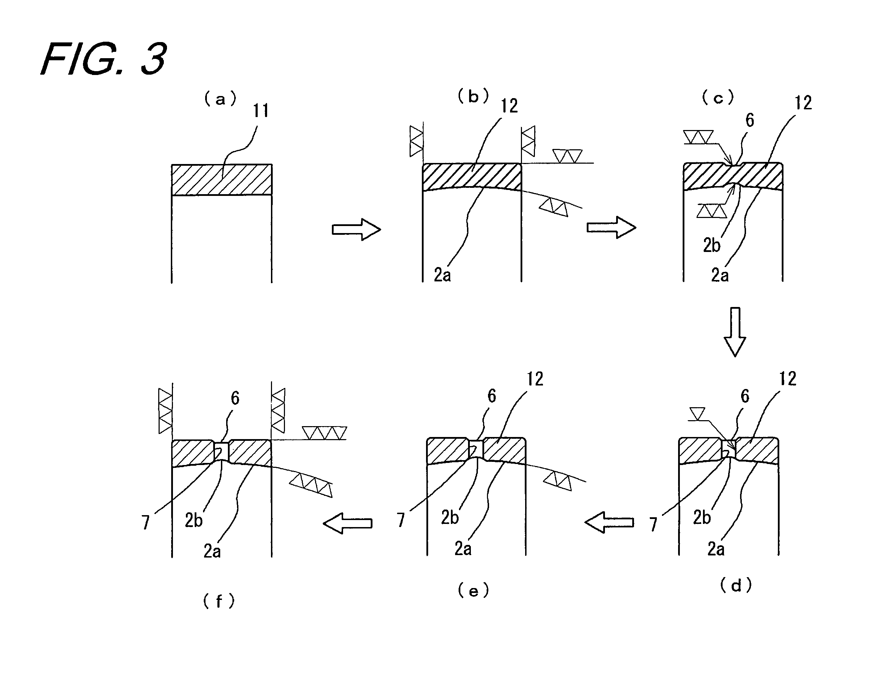

Fig. 3 is a process drawing showing the method of producing the outer ring 2 of the above self-aligning bearing. In this production method, first, a steel material such as bearing steel is hot forged to form an annular stock 11 (see Fig. 3(a)), and a turning operation is applied to this annular stock 11 to thereby form a blank 12 having predetermined machining allowances formed respectively at its outer periphery, outer raceway 2a and side faces (first turning step: see Fig. 3(b)).

Then, the lubrication groove 6 and the annular groove 2b are formed respectively in the outer periphery and inner periphery of the blank 12 by turning (see Fig. 3(c)). Here, the cross-sectional shape of the annular groove 2b (formed in the inner periphery of the blank 12 by turning) including the axis has a uniform shape in the circumferential direction. The purpose of this is to effect the turning operation for the annular groove 2b efficiently and also to make the boundary between the annular groove 2b and the inner peripheral surface of the blank 12 annular so that the discontinuous turning operation and the discontinuous grinding operation will be less liable to occur respectively at the second turning step and the grinding step. Thereafter, a plurality of lubrication holes 7 open to the lubrication groove 6 at the outer periphery and also to the annular groove 2b at the inner periphery are formed in the blank 12 (boring step: see Fig. 3(d)). This lubrication hole 7 is formed by cutting the outer ring 2 in such a manner that the drill extends radially through the outer ring.

After the lubrication holes 7 are formed, a heat treatment such as hardening and annealing is applied to the blank 12, thereby hardening this blank 12 to predetermined hardness, for example, of HRC about 58 to 64 required for a bearing outer ring.
When this heat treatment step is finished, the outer raceway 2a is turned by a turning tool such as a cutting tool, while leaving a grinding allowance (second turning step: see Fig. 3(e)). At this time, the cutting of the lubrication hole (7) portions can be omitted thanks to the annular groove 2b, and therefore the discontinuous cutting operation due to the lubrication holes 7 can be avoided.
When the second turning step is finished, the outer periphery, the raceway 2a and the side faces are ground for finishing purposes (grinding step: see Fig. 3(f)). At this time, the grinding of the lubrication hole (7) portions can be omitted thanks to the annular groove 2b, and therefore the discontinuous grinding operation due to the lubrication holes 7 can be avoided. Further, the raceway 2a is super finished, thus completing the production of the outer ring 2.

As described above, in the self-aligning roller bearing-producing method of the present invention, at the second turning step of turning the outer raceway 2a after the heat treatment, the discontinuous cutting operation occurring because of the lubrication holes 7 can be avoided by the annular groove 2b, and therefore an undesirable situation in which a strong impact acts on the turning tool to chip its cutting edge can be prevented from occurring. Therefore, a life of the turning tool can be prolonged, and also the raceway can be prevented from being damaged.

Furthermore, in the self-aligning roller bearing-producing method of the present invention, at the grinding step after the heat treatment, the discontinuous grinding operation occurring because of the lubrication holes 7 can be avoided by the annular groove 2b, and therefore the development of an undesirable situation in which a strong impact acts on a grindstone to damage the grindstone can be suppressed. Therefore, a life of the grindstone can be prolonged, and also the efficiency of the grinding step can be enhanced.

In the above embodiment, although the annular groove 2b is formed before the boring step of forming the lubrication holes 7, the annular groove 2b may be formed after the lubrication holes 7 are formed, and in short it is only necessary to form the annular groove 2b before the heat treatment step.

Furthermore, in the above embodiment, although the outer raceway 2a is ground for finishing purposes after the second turning step, there are occasions when the grinding step is omitted. Of courses, instead of the grinding step for the outer raceway 2a after the second turning step, a step other than the grinding finish step, such as a step of lapping the outer raceway 2a after the second turning step, can be effected.

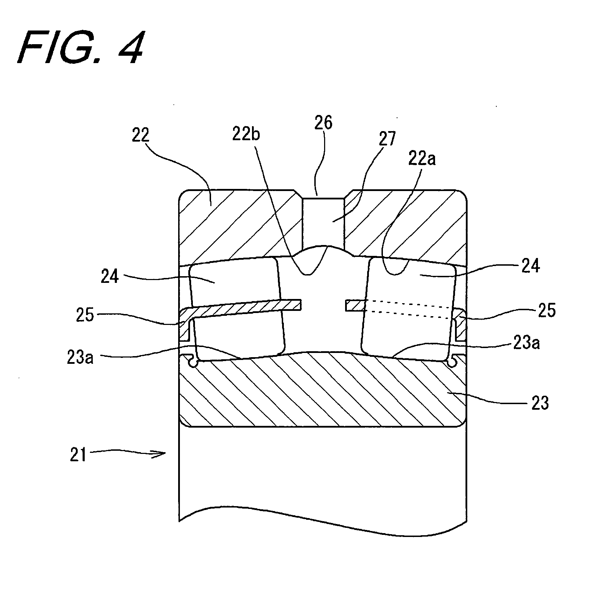

Fig. 4 is a cross-sectional view showing an important portion of a self-aligning bearing incorporating an outer ring produced by another production method of the present invention. In this self-aligning roller bearing 21, the outer ring 22 having a spherical outer raceway 22a formed on an inner periphery thereof and an inner ring 23 having an inner raceway 23a of a cross-sectionally arc-shape (having the same radius as a radius of the outer raceway 22a in a cross-section including a center axis of this inner ring) formed on an outer periphery thereof are disposed coaxially with each other, and a plurality of rolling elements 24 are interposed between the outer ring 22 and the inner ring 23.

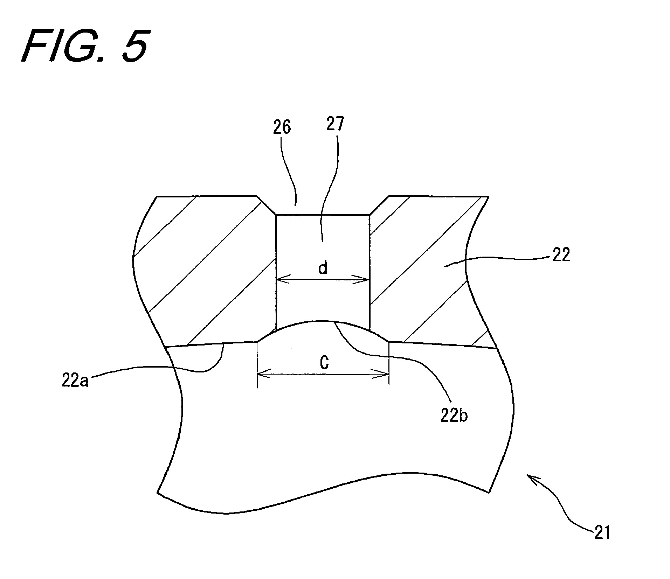

An annular lubrication groove 26 is formed in and along an axially-central portion of the outer periphery of the outer ring 22, and a plurality of lubrication holes 27 for supplying lubricating oil to the interior of the bearing are formed through the outer ring inwardly of this lubrication groove, and are arranged at predetermined intervals in a circumferential direction. About 3 to 8 lubrication holes 27 are formed.
Referring also to Fig. 5, an annular groove 22b is formed in the inner periphery of the outer ring 22. This annular groove 22b is provided in corresponding relation to the lubrication holes 27, and each lubrication hole 27 is open to a bottom of this annular groove 22b. In the drawings, this annular groove 22b has an arc-shaped cross-section, and its axial width C is larger than a bore diameter d of the lubrication hole 27, and also is set to such a range that in a condition in which the axis of the inner ring 23 is inclined to a maximum degree relative to the axis of the outer ring 22, a rolling contact surface of the rolling elements 24 will not overlap the annular groove 22b. This annular groove 22b is provided for the purpose of avoiding a situation in which a discontinuous grinding operation occurs at a grinding step (described later) because of the lubrication holes 27.

The rolling elements 24 comprise respective convex rollers made of bearing steel hardened by a heat treatment, and are rollably interposed in a double-row manner between the outer raceway 22a of the outer ring 22 and the inner raceway 23a of the inner ring 23. The rolling elements 24 are held at predetermined intervals by a cage 25.

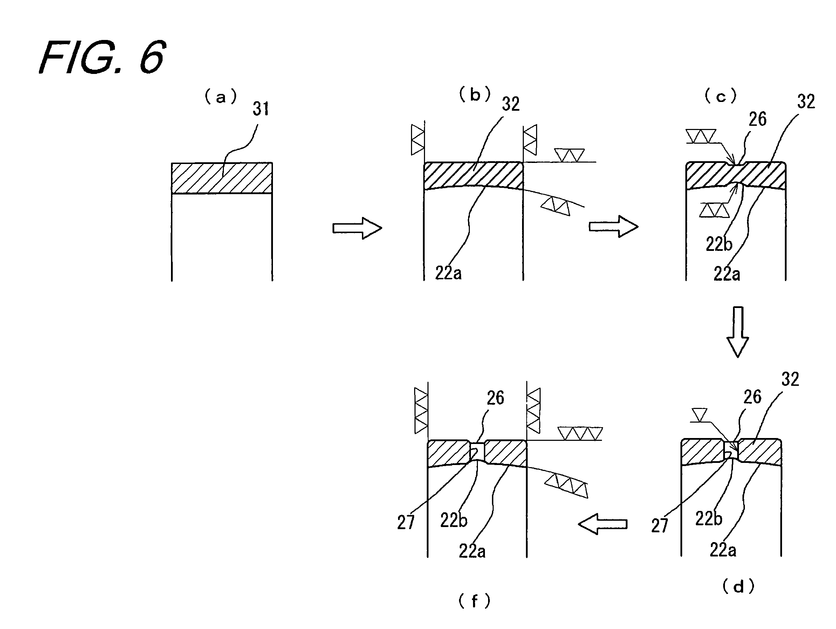

Fig. 6 is a process drawing showing the method of producing the outer ring 22 of the above self-aligning bearing. In this production method, first, a steel material such as bearing steel is hot forged to form an annular stock 31 (see Fig. 6(a)), and a turning operation is applied to this annular stock 31 to thereby form a blank 32 having predetermined grinding allowances formed respectively at its outer periphery, outer raceway 22a and side faces (first turning step: see Fig. 6(b)).

Then, the lubrication groove 26 and the annular groove 22b are formed respectively in the outer periphery and inner periphery of the blank 32 by turning (see Fig. 6(c)). Here, the cross-sectional shape of the annular groove 22b (formed in the inner periphery of the blank 32 by turning) including the axis has a uniform shape in the circumferential direction. The purpose of this is to effect the turning operation for the annular groove 22b efficiently and also to make the boundary between the annular groove 22b and the inner peripheral surface of the blank 32 annular so that the discontinuous grinding operation will be less liable to occur at the grinding step. Thereafter, a plurality of lubrication holes 27 open to the lubrication groove 26 at the outer periphery and also to the annular groove 22b at the inner periphery are formed in the blank 32 (boring step: see Fig. 6(d)). This lubrication hole 27 is formed by cutting the outer ring 22 by a drill in such a manner that the drill extends radially through the outer ring.

After the lubrication holes 27 are formed, a heat treatment such as hardening and annealing is applied to the blank 32, thereby hardening this blank 32 to predetermined hardness, for example, of HRC about 58 to 64 required for a bearing outer ring.
When this heat treatment step is finished, the outer periphery, the raceway 2a and the side faces are ground for finishing purposes (grinding step: see Fig. 6(f)). At this time, the grinding of the lubrication hole (27) portions can be omitted thanks to the annular groove 22b, and therefore the discontinuous grinding operation due to the lubrication holes 27 can be avoided. Further, the raceway 2a is super finished, thus completing the production of the outer ring 2.

In the self-aligning roller bearing-producing method of the present invention, at the grinding step after the heat treatment, the discontinuous grinding operation occurring because of the lubrication holes 27 can be avoided by the annular groove 22b, and therefore the development of an undesirable situation in which a strong impact acts on a grindstone to damage the grindstone can be suppressed. Therefore, a life of the grindstone can be prolonged, and also the efficiency of the grinding step can be enhanced.

In the above embodiment, although the annular groove 22b is formed before the boring step of forming the lubrication holes 27, the annular groove 22b may be formed after the lubrication holes 27 are formed, and in short it is only necessary to form the annular groove 22b before the heat treatment step.

## Claims

1. A method of producing an outer ring of a self-aligning bearing, comprising:
a first turning step of turning an annular stock to form a blank having a predetermined machining allowance formed at a raceway;
a boring step of forming lubrication holes in said blank which lubrication holes are open to the raceway and an outer periphery of the blank;
a heat treatment step of hardening the blank, having said lubrication holes formed therein, to predetermined hardness; and
a second turning step of turning said raceway after the heat treatment step; **characterized in that**:
before said heat treatment step, a turning operation is applied to that portion of said raceway corresponding to the lubrication holes to form an annular groove for avoiding a situation in which a discontinuous cutting operation occurs at said second turning step because of said lubrication holes.

2. A method of producing an outer ring of a self-aligning bearing, comprising:
a first turning step of turning an annular stock to form a blank having a predetermined machining allowance formed at a raceway;
a boring step of forming lubrication holes in said blank which lubrication holes are open to the raceway and an outer periphery of the blank;
a heat treatment step of hardening the blank, having said lubrication holes formed therein, to predetermined hardness;
a second turning step of turning said raceway after the heat treatment step while leaving a grinding allowance; and
a grinding step of grinding the raceway for finishing purposes after the second turning step; **characterized in that**:
before said heat treatment step, a turning operation is applied to that portion of said raceway corresponding to the lubrication holes to form an annular groove for avoiding a situation in which a discontinuous cutting operation and a discontinuous grinding operation occur respectively at said second turning step and said grinding step because of said lubrication holes.

3. A method of producing an outer ring of a self-aligning bearing, comprising:
a turning step of turning an annular stock to form a blank having a predetermined grinding allowance formed at a raceway;
a boring step of forming lubrication holes in said blank which lubrication holes are open to the raceway and an outer periphery of the blank;
a heat treatment step of hardening the blank, having said lubrication holes formed therein, to predetermined hardness; and
a grinding step of grinding the raceway for finishing purposes after the heat treatment step; **characterized in that**:
before said heat treatment step, a turning operation is applied to that portion of said raceway corresponding to the lubrication holes to form an annular groove for avoiding a situation in which a discontinuous grinding operation occurs at said grinding step because of said lubrication holes.
